# EUROPEAN PATENT APPLICATION

(11) **EP 4 733 798 A1**
(43) Date of publication of application: **29.04.2026**
(21) Application number: 24208942.3
(22) Date of filing: 25.10.2024
(51) Int. Cl.: G01S 7/35, G01S 7/41, G01S 13/58

(54) **APPARATUS FOR DETECTING MICRO MOTION, RADAR SENSOR, ELECTRONIC DEVICE, METHOD, NON-TRANSITORY MACHINE-READABLE MEDIUM, AND PROGRAM**

(71) Applicant: Infineon Technologies AG, 85579 Neubiberg (DE)
(72) Inventor: GOVINDA KAMMATH, Abhilash, 82008 Unterhaching (DE); WEILAND, Lorenz, 80637 München (DE)
(74) Representative: 2SPL Patentanwälte PartG mbB

(57) **Abstract**

Provided is an apparatus for detecting micro motion in a scene sensed by a radar sensor having one or more receive channel. The apparatus includes processing circuitry configured to receive radar data outputted by the radar sensor for each receive channel, the radar data being arranged as frames for each receive channel. The processing circuitry is further configured to for each receive channel, for each frame and for each range bin of a plurality of range bins of the radar data, each range bin corresponding to a distance window relative to the radar sensor, extract micro motion information from the radar data of the considered range bin and generate a first value from said micro motion information. The processing circuitry is further configured to for each receive channel, for each frame, for each range bin, determine a second value based on the first value determined for the considered range bin at the considered frame and a prior first value determined for the considered range bin at a prior frame. The processing circuitry is further configured to for each range bin, determine a third value for the considered range bin based on the respective second values. The processing circuitry is further configured to determine occurrence of the micro motion in the scene based on the third values.

## Description

### Field

The present disclosure relates to an apparatus for detecting micro motion, a radar sensor, an electronic device, a method, a non-transitory machine-readable medium, and a program.

### Background

Micro Motions are used for various applications. For example, micro motions are used to detect motion signatures of static persons to determine whether the person is awake or not. Conventionally, either a large bandwidth or a high number of channels is used to increase the probability of detection. Other approaches create virtual frames from multiple real radar frames, which requires to store multiple frames and thus, requires large memory.

Accordingly, there is a demand for improved detection of micro motions.

### Summary

The demand may be satisfied by the subject-matter of the independent claims. Further embodiments are given by the dependent claims, the drawings, and the following description.

According to a first aspect, the present disclosure provides an apparatus for detecting micro motion in a scene sensed by a radar sensor having one or more receive channel. The apparatus comprises processing circuitry configured to receive radar data outputted by the radar sensor for each receive channel, the radar data being arranged as frames for each receive channel. The processing circuitry is further configured to for each receive channel, for each frame and for each range bin of a plurality of range bins of the radar data, each range bin corresponding to a distance window relative to the radar sensor, extract micro motion information from the radar data of the considered range bin and generate a first value from said micro motion information. The processing circuitry is further configured to for each receive channel, for each frame, for each range bin, determine a second value based on the first value determined for the considered range bin at the considered frame and a prior first value determined for the considered range bin at a prior frame. The processing circuitry is further configured to for each range bin, determine a third value for the considered range bin based on the respective second values. The processing circuitry is further configured to determine occurrence of the micro motion in the scene based on the third values.

According to a second aspect, the present disclosure provides a radar sensor comprising an apparatus for detecting micro motion according the first aspect. The radar sensor further comprises one or more transmit channel configured to transmit one or more transmit signal into a field of view of the radar sensor. The radar sensor further comprises one or more receive channel configured to generate the radar data based on received reflections of the one or more transmit signal.

According to a third aspect, the present disclosure provides an electronic device comprising a radar sensor according to the second aspect. The electronic device further comprises processing circuitry coupled to the radar sensor and configured to perform a predefined action if occurrence of micro motion in the scene is determined by the radar sensor.

According to a fourth aspect, the present disclosure provides a method for detecting micro motion in a scene sensed by a radar sensor having one or more receive channel. The method comprises receiving radar data outputted by the radar sensor for each receive channel, the radar data being arranged as frames for each receive channel. The method further comprises for each receive channel, for each frame and for each range bin of a plurality of range bins of the radar data, each range bin corresponding to a distance window relative to the radar sensor, extracting micro motion information from the radar data of the considered range bin and generating a first value from said micro motion information. The method further comprises for each receive channel, for each frame, for each range bin, determining a second value based on the first value determined for the considered range bin at the considered frame and a prior first value determined for the considered range bin at a prior frame. The method further comprises for each range bin, determining a third value for the considered range bin based on the respective second values. The method further comprises determining occurrence of the micro motion in the scene based on the third values.

According to a fifth aspect, the present disclosure provides a non -transitory machine-readable medium having stored thereon a program having a program code for performing the method according to the fourth aspect, when the program is executed on a processor or a programmable hardware.

According to a sixth aspect, the present disclosure provides a program having a program code for performing the method according to the fourth aspect, when the program is executed on a processor or a programmable hardware.

### Brief description of the Figures

Some examples of apparatuses and/or methods will be described in the following by way of example only, and with reference to the accompanying figures, in which
Fig. 1 depicts an apparatus for detecting micro motion according to the present disclosure;
Fig. 2 depicts a radar sensor according to the present disclosure;
Fig. 3 depicts an electronic device according to the present disclosure;
Fig. 4 depicts a flowchart of a method for detecting micro motion according to the present disclosure; and
Fig. 5 depicts different diagrams representing an output at different steps of the present disclosure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

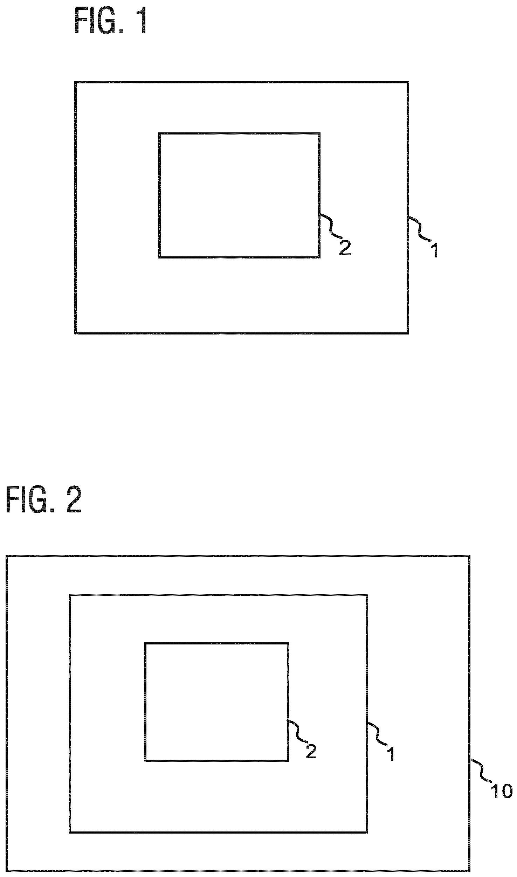

Fig. 1 depicts an apparatus 1 for detecting micro motion in a scene (e.g., of an object). The scene is sensed by a radar sensor having one or more receive channel, as will be discussed further below under reference of Fig. 2. The apparatus includes processing circuitry 2. The processing circuitry may be a single dedicated processor, a single shared processor, or a plurality of individual processors, some of which or all of which may be shared, a digital signal processor (DSP) hardware, an application specific integrated circuit (ASIC), a neuromorphic processor or a field programmable gate array (FPGA). The processing circuitry 2 may optionally be coupled to, e.g., read only memory (ROM) for storing software, random access memory (RAM) and/or non-volatile memory.

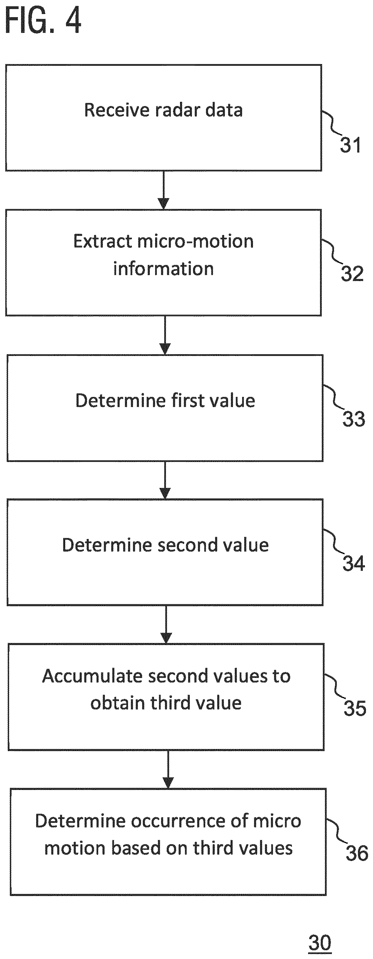

In the following description of Fig. 1, reference signs may also relate to the method of Fig. 4 which may be carried out by the processing circuitry 2.

The processing circuitry 2 is configured to receive radar data 101 generated by the radar sensor through sensing of the scene. The radar data 101 may, for example, represent multiple samples where each sample may be a digital number between 0 and (2N)-1 indicating (representing) a digitized amplitude or voltage of a respective measurement signal (as obtained by the one or more receive channel), or a normalized value thereof. N may correspond to a resolution of the radar data (which may, e.g., be determined by the resolution of an Analog-to-Digital Converter, ADC, of the radar sensor sampling a respective antenna receive signal or measurement signal).

In other words, the radar data 101 that are received by the processing circuitry 2 are output by the radar sensor for each receive channel. The samples or the raw data are arranged as (consecutive) frames, each frame representing a time period at which the respective samples included in the frame have been obtained (e.g., acquired, received, or the like). Hence, if multiple receive channels are used, each receive channel may output the raw ADC data as frames, for example.

The processing circuitry 2 is further configured to extract micro motion information 102 from the radar data 101. Such an extraction is carried out for each receive channel, for each frame, and for each range bin. A range bin may correspond to a distance window relative to the radar sensor. In general, in radar processing, a range bin may be understood as a receptacle of data corresponding to a distance range. The bins may be predefined and/or be based on at least one of radar parameters and frequency estimation techniques that are used. Each bin may be filled with corresponding radar data of the radar data 101. For example, range FFT (fast Fourier transformation) or Fast Time FFT may be performed on the ADC sampled data for each chirp and receiver. A result of the range FFT may correspond to an indication of energy distribution across ranges for each chirp and receiver. Each FFT bin of the range FFT may be scaled to range and may depend on an operational RF bandwidth and propagation speed. Therefore, FFT bins of range FFT may also be called as Range bins.

Micro motion may indicate motion that is executed by a stationary/non-actively moving (living) object. For example, a person that is sitting on a chair and not (consciously) moving may still exhibit micro motion, e.g. due to breathing, eye-flickering, stationary muscle activity, tremor, or the like. Similarly, a sleeping person (or animal) may exhibit micro motion in a similar manner. Also, micro motion may be caused by a (slight) body posture change, for example.

More generally, micro motion may refer to small (subtle) movements or vibrations of a target object. These motions may be caused by various factors, such as mechanical vibrations, respiratory movements (in the case of humans or animals), or (minor) mechanical movements of parts of a structure. Micro motions may typically be on a much smaller scale compared to a primary motion of the target, the primary motion relating to, e.g., walking or driving. Also, micro motion maybe superimposed with the primary motion.

Extraction of the micro motion information 102 may be based on filtering the (raw) radar data 101 in the range bin or based on filtering range FFT or fast time FFT output (e.g., mean of the range FFT output in chirp dimension for each receiver channel). Extraction of micro motion information may additionally or alternative be carried out by first performing slow time FFT or Doppler FFT along the chirp dimension for each range bin and receiver channel followed by filtering out the zero Doppler components for each range bin and receiver channel. A result of the slow time FFT or Doppler FFT may be an indication of energy distribution across different Dopplers for each range bin and receiver channel. FFT bins of Doppler FFT may depend on the RF center frequency and therefore, frequency bins of Doppler FFT may also be called Doppler bins.

Hence, the (entire) radar data 101 for a range bin may be considered for extracting the micro motion information 102. For example, the extraction may be carried out across multiple chirps. In other words, the radar data 101 contained in each range bin having a zero doppler value/component (e.g., a mean of the samples in a chirp dimension) may be retrieved/obtained. The micro motion information 102 may have various forms, such as one or more particular range bins for which a certain value is determined, such as a zero doppler value, but the present disclosure shall not be understood as limiting in that regard. For example, the micro motion information 102 may additionally or alternatively be determined or extracted based on a low-pass filter across the chirp dimension in order to a extract low-frequency component.

Based on the micro motion information 102, a first value 103 is generated. For example, if a range-doppler representation (also referred to as range-doppler map) is used, a range bin (as a first value 103 or data associated with a range bin as a first value) may be determined which is associated with or which includes a zero-doppler value, the range bin indicating the first value 103 (i.e., a range). In other words, static target information may be extracted by combining the chirps after the range FFT by averaging (see also above).

Such a determination may be carried out for multiple frames such that a plurality of first values 103 is determined for the considered range bin. Based on the first values 103, a second value 104 is determined for each receive channel, for each frame, and for each range bin. The second value 104 may be determined based on a first value 103 of a current/considered frame and a first value 103 of a (directly) preceding frame, such that the second value 104 corresponds to a (delta) change of the first value(s) 103 between the considered frames. For example, if the zero doppler value/bin is used as a first value 103, a change of the zero doppler value/bin is indicative of the micro motion (e.g., for that range bin), in some examples. In examples, a moving target indicator algorithm is applied for determining the second value(s) 104, as will be discussed further below.

Following this determination, for each range bin, the second values 104 that are associated to the different channels and to one or more (or two or more) frames may be used (e.g. through a combination thereof) to determine a third value 105 for the considered range bin based on which the occurrence of micro motion 106 in the scene may be determined. In other words, for each range bin, a third value may be determined for the considered range bin based on a combination of the respective second values. There may be various ways how the second values may be combined or used in order determine the third value for the considered range bin.

For example, the combining or using of the second values 104 may include an accumulation of the second values 104 across the different receive channels and over a predetermined number of consecutive frames to generate the third value(s). Consecutive frames may include frames directly following each other (in time) or frames that follow each other but are spaced apart by other frames which are not used for the accumulation (e.g., cherry picking of the frames may be carried out for the accumulation). The accumulation may include an integration, such as a non-coherent integration, without limiting the present disclosure in that regard. A non-coherent integration may refer to a combination of signals of multiple radar pulses in a way that does not require phase coherence between the pulses. Hence, as stated above, the integration may be carried out across the different receive channels, i.e., the data obtained for the different receive channels may be combined/accumulated in such a fashion.

In examples, the accumulation is performed using absolute values of the second values over the one or more receive channels (e.g., and for a certain number of frames), e.g., based on a sum of the absolutes of the second values, a weighted sum of the absolutes of the second values, a (non-coherent) integration as described above, any combination of the second values, or the like. For example, if a change of a previous first value to a current first value would result in a negative second value, this negative second value would be turned into a positive value by taking the absolute.

The absolute value may be taken because across the different receive channels, phase information may depend on a location of a target in space. And azimuth and elevation angle of the target with respect to the radar may directly map to phases at the receivers. Just summing up coherently without taking the absolute (which may also be possible, in some examples) may correspond to a beamforming into some direction, as this might promote specific phase differences between the antennas. Taking the absolute value may avoid this by ignoring the phases of the receive channels.

The number of consecutive frames that is used may depend on the use case. For example, stability considerations of the micro motion detection may be made. If the number of frames is low, the reliability of the detection may decrease below a desired level. If the number of frames is high, for example the processing power involved in the conduct of the method may increase beyond a desired level. As another example, time delay or a time for averaging may increase when the number of frames is too high. Hence, the number of frames may be chosen to satisfy a desired trade-off between these considerations.

However, it should be noted that the present disclosure is not limited to an accumulation across the different receive channels over a predetermined number of consecutive frames, as discussed above. For example, any combination (e.g. linear combination or non-linear combination, weighted sum, weighted product, or the like) of any magnitude (e.g., channels, frames, time, and the like) with respect to the second values 104 may be used for determining the third values 105.

The third values being generated by combination of the corresponding second values may allow for an increase of the robustness of the system to the (unavoidable) variability of the information contained in the radar data and relating to micromotion. As such, the generation of the third value(s) and their usage for micro motion detection may form a consolidating mechanism of the micro motion information while allowing the detection function to remain remarkably light in terms of required processing power.

As indicated above, based on the third values 105, occurrence of micro motion 106 in the scene (or of the object in the scene) may be determined.

For example, for determining the occurrence of the micro motion 106 in the scene, the processing circuitry 2 may be configured to apply adaptive thresholding to the third values 105 to discern whether the third values derive from the micro motion 106.

Adaptive thresholding may refer to a technique to dynamically adjust a threshold value (i.e., a lower or upper threshold (or both)) to the third values 105. Using adaptive thresholding may be useful when dealing with varying signal conditions, as it allows for more accurate and context-sensitive detection. Hence, in contrast to "constant" thresholding, "adaptive" thresholding may be used to set dynamic thresholds based on the radar data 101. For example, adaptive thresholding may take into account local variations in signal intensity. Thereby features in areas with different background levels or noise conditions may be distinguished. The threshold may be adapted based on local statistics, such as a mean, median, standard deviation, or any other statistical measure within a defined neighborhood.

The adaptive thresholding may include subjecting the third values 105 to constant false alarm rate (CFAR) detection. CFAR detection may be used for ensuring a consistent false alarm rate despite varying noise and clutter. False alarm rate may refer to a probability of incorrectly declaring a presence of a target when there is none. There may be different types of CFAR algorithms, for example cell averaging CFAR, greatest of CFAR, smallest of CFAR, order statistics CFAR, and the like. Only one CFAR algorithm may be used or multiple CFAR algorithms may be combined according to the present disclosure.

In examples, the processing circuitry 2 is optionally configured to filter the third values 105 for one or more predetermined range bins to remove the predetermined range bins from subsequent processing. For example, range masking may be used to filter out detections from the predetermined range bins. "Predetermined" in this context may refer to the case that at some point in the processing, it is recognized which range bins may be of interest. Hence, "predetermined" may not necessarily refer to the case that the range bins of interest are always the same, but also that a dynamic adaptation of the range bins based on any of the method steps may be possible. The range bins of interest may, for example, depend on a position of the radar sensor with respect to the object. If the radar sensor is provided in a mobile phone and the sensor is used for activity tracking of a user, range bins of interest might always be more or less the same, since, if the user holds the phone, the distance between the phone and the user may be more or less the same. On the other hand, if the radar sensor is provided in a surveillance camera, range bins of interest may vary since the surveillance camera might need to cover a large field of view.

In examples, the processing circuitry 2 is further configured to increment a respective counter for the different range bins (or for the respective range bin) in response to determining that the third value 105 derives from the micro motion 106.

A counter may be used for providing more stability to the method. For example, if occurrence of a micro motion 106 has been determined only once for a respective range bin, this could be caused by a measurement error. Therefore, if the counter for the range bin reaches a predetermined value, the likelihood that the micro motion happens for this particular range bin may be considered sufficient since the determination of the third value 105 has been carried out multiple times.

On the other hand, the processing circuitry 2 may be further (additionally or alternatively) configured to decrement a respective counter for the different range bins, in response to determining that the third value 105 is not derived from the micro motion 106. For example, if two range bins indicate micro motion 106 after a first measurement, but one range bin wrongfully indicated the micro motion 106, this error may be compensated for in the next determination/measurement by decreasing the counter again, whereas the counter of the correct range bin might be increased again.

Hence, measurement stability may be provided based on increasing or decreasing the counters (or both).

In examples, for determining occurrence of the micro motion 106 in the scene, the processing circuitry 2 is further configured to determine occurrence of the micro motion 106 in a respective range bin in response to a value of the counter for the range bin satisfying a predefined criterion. For example, the predetermined threshold value that the counter may need to reach may be such a predefined criterion. On the other hand, a time value after which the counter is increased might correspond to such a criterion. Furthermore, a differential counter value (the counter value being ahead of the other counter(s) by a certain value) may be such a predefined criterion.

As indicated above, in examples, for determining the second values, the processing circuitry 2 is configured to execute a moving target indicator (MTI) algorithm. For example, the second values may be a (direct) output of an MTI algorithm or may be a further processed output of an MTI algorithm. MTI may rely on the presence of a Doppler shift. By focusing on the Doppler shifts, (stationary) clutter may be filtered, since it may have little or no Doppler shift, thus highlighting the moving targets.

Hence, the MTI algorithm may be used for discriminating a moving target against static clutter. Hence, the second values 104 (the changes of the first values) may be identified for a static target between the frames. However, the present disclosure is not limited to using an MTI. Additionally or alternatively, an infinite impulse response (I I R) filter and/or weighted averaging may be applied.

Fig. 2 depicts a radar sensor 10. The present disclosure is not limited to any specific type of radar sensor. For example, the radar sensor may be based on a doppler radar, a frequency modulated continuous wave (FMCW) radar, or the like. The radar sensor 10 includes the apparatus for detecting micro motion 1 as described under reference of Fig. 1.

The radar sensor 10 further includes one or more transmit channel (not depicted) configured to transmit one or more transmit signal into a field of view of the radar sensor, as generally known. Likewise, the radar sensor 10 includes one or more receive channel configured to generate the radar data based on received reflections (or echoes) of the one or more transmit signal, as generally known.

In examples, the radar sensor 10 further includes a radio frequency integrated circuit (RFIC). The apparatus 1 for detecting micro motion may be included in the RFIC.

An RFIC may refer to a (highly) integrated circuit that operates at radio frequencies, for example designed to handle and process RF signals within the range of 3 kHz to 300 GHz. An RFIC may incorporate multiple RF functions onto a single semiconductor substrate. The integration of components such as low noise amplifiers, mixers, oscillators, power amplifiers, and filters within an RFIC allows for enhanced signal integrity, reduced power consumption, and miniaturization, making it suitable for radar applications according to the present disclosure.

In examples, the apparatus for micro motion detection is implemented as register transfer level (RTL) circuitry.

RTL circuitry may refer to a digital circuit design methodology that describes the flow of data and control signals between hardware registers and gates, and the logical operations performed on this data. RTL circuits may form the basis for the synthesis of digital systems and are typically used to model and implement complex digital functions in hardware description languages. Such circuitry may enable to specify the behavior of digital systems at a high level of abstraction, focusing on the movement and transformation of data rather than the detailed gate-level implementation. Thereby, the methods of the present disclosure may be implemented on the RFIC.

For example, in the context of the present disclosure, an RTL may receive the data from the receive channels and carry out the corresponding processing discussed herein. The RTL may include a plurality of register for (at least temporarily) storing data and gates for carrying out (logical) operations, such as range FFT, Doppler FFT, MTI, integration, CFAR, range masking, and the like which, thus, may be hard-coded on the RTL. Registers may accordingly implement the motion event counters.

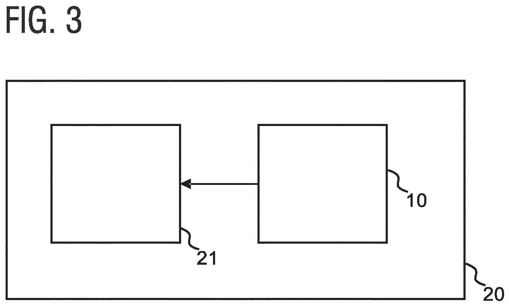

Fig. 3 depicts an electronic device 20 according to the present disclosure. The electronic device may have various forms. For example, it may be a vehicle such as a car, a truck or a motorcycle. In other examples, the electronic device may be or may be included in a consumer product such as, e.g., one of a mobile phone, a laptop-computer, a tablet-computer, a wearable like a smartwatch, a TV, or the like. An electronic device according to the present disclosure may also be used for other applications such as home appliances (e.g., movement sensor) or (smart) toilets, surveillance cameras, or the like. In other words, the electronic device may be a home appliance, a (smart) toilet, a surveillance camera, or the like.

The electronic device 20 accordingly includes the radar sensor 10 as discussed under reference of Fig. 2.

The electronic device 20 further includes processing circuitry 21 coupled to the radar sensor and configured to perform a predefined action if occurrence of micro motion in the scene is determined by the radar sensor 10. Hence, micro motion data is supplied from the radar sensor to the processing circuitry 21 and the processing circuitry 21 receives the micro motion data in order to determine whether a predefined action is to be performed. Hence, the micro motion data may indicate no micro motion or may indicate micro motion. In a different example, the absence of micro motion data indicates that no micro motion has been determined.

The predetermined action may depend on the application that the electronic device is used for. Generally, the predetermined action may include activating (or deactivating) a function of the electronic device. For example, if the electronic device is provided in a mobile phone or a laptop computer, the predetermined action may include activating a sensor for unlocking the phone (or computer). If the electronic device is provided in a camera, the predetermined action may include activating the camera and start a recording. If the electronic device is provided in a TV, the predetermined action may include changing a channel, starting an application, increasing (or decreasing) a volume of content being played back or pausing playback of a content. However, the present disclosure shall not be limited to any particular function.

Fig. 4 depicts a method 30 for detecting micro motion in a scene sensed by a radar sensor having one or more receive channel, as discussed herein.

The method includes, 31, receiving radar data 101 outputted by the radar sensor for each receive channel, the radar data being arranged as frames for each receive channel, as discussed herein.

The method further includes, 32, for each receive channel, for each frame and for each range bin of a plurality of range bins of the radar data, each range bin corresponding to a distance window relative to the radar sensor, extracting micro motion information 102 from the radar data of the considered range bin and, 33, generating/determining a first value 103 from said micro motion information 103, as discussed herein.

The method further includes, 34, for each receive channel, for each frame, for each range bin, determining a second value 104 based on the first value 103 determined for the considered range bin at the considered frame and a prior first value 103 determined for the considered range bin at a prior frame, as discussed herein.

The method further includes, 35, for each range bin, determining a third value 105 for the considered range bin based on the respective second values, as discussed herein.

The method further includes, 36, determining occurrence of the micro motion 106 in the scene based on the third values 105.

In examples, a non-transitory machine-readable medium is provided having stored thereon a program having a program code for performing the method(s) discussed herein, when the program is executed on a processor or a programmable hardware.

In examples, a program is provided having a program code for performing the method(s) discussed herein, when the program is executed on a processor or a programmable hardware.

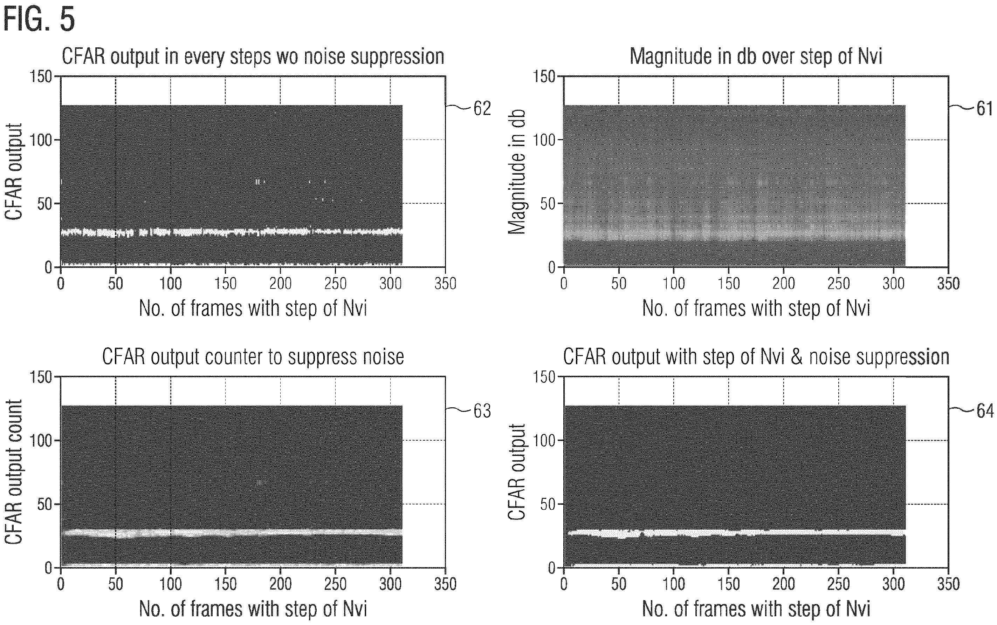

Fig. 5 depicts different diagrams representing an output at different steps of the present disclosure.

On the top right, diagram 61 depicts a strength of the signal after accumulation/integration, but before CFAR is carried out. Hence, diagram 61 depicts a magnitude (in db) over a number of frames for which the integration is carried out with a step of Nvi (in Fig. 7, "Nvi" indicates the accumulation of a certain number of frames, which is 10 in this embodiment). As can be taken from diagram 61, the integration output is noisy, such that further processing (e.g., CFAR) and noise suppression is carried out.

On the top left, diagram 62 depicts an output of the CFAR (before noise suppression) as a number of range bins over a number of accumulated frames. As can be taken from diagram 62, the CFAR output is still noisy and some outliers are present.

On the bottom left, diagram 63 depicts a CFAR output with subsequent noise suppression based on a motion event counter, as discussed herein, as a number of range bins over a number of accumulated frames. In diagram 63, the motion event counter value is depicted whenever a detection is observed on a respective range bin. Compared to diagram 61, the diagram 63 represents counts of the CFAR detections within a certain time window. As can be taken from diagram 63, the outliers that were present in diagram 62 are suppressed.

On the bottom right, diagram 64 depicts a CFAR output with noise suppression. In diagram 64, low counter values (of diagram 63) are removed based on thresholding and thus, the noise in the detected micro motion is suppressed. Hence, diagram 64 symbolizes reliable micro motion signatures from the object/person after thresholding the motion event counter.

In Fig. 5, the number of range bins (N_rb) is 128, the number of frames used for accumulation (Nvi) is 10, the total number of available frames (N) is 3200, and the number of frames with a step of Nvi is (N/Nvi) is 320.

According to the principles of the present disclosure, an application specific integrated processor/circuit (ASIP/ASIC) can be used for detecting micro motion signatures. Thereby, requirements of bandwidth regulations and small form factor can be maintained (in contrast to known solutions), and also low memory and processing power may be used.

More details and aspects of the methods discussed herein are explained in connection with the proposed technique or one or more examples described above (e.g., Figs. 1 to 5). The methods may comprise one or more additional optional features corresponding to one or more aspects of the proposed technique or one or more examples described above.

The examples and embodiments described herein may be summarized as follows:
An example (e.g., example 1) relates to an apparatus for detecting micro motion in a scene sensed by a radar sensor having one or more receive channel. The apparatus comprises processing circuitry configured to receive radar data outputted by the radar sensor for each receive channel, the radar data being arranged as frames for each receive channel. The processing circuitry is further configured to, for each receive channel, for each frame and for each range bin of a plurality of range bins of the radar data, each range bin corresponding to a distance window relative to the radar sensor, extract micro motion information from the radar data of the considered range bin and generate a first value from said micro motion information. The processing circuitry is further configured to, for each receive channel, for each frame, for each range bin, determine a second value based on the first value determined for the considered range bin at the considered frame and a prior first value determined for the considered range bin at a prior frame. The processing circuitry is further configured to, for each range bin, determine a third value for the considered range bin based on the respective second values. The processing circuitry is further configured to determine occurrence of the micro motion in the scene based on the third values.

Another example (e.g., example 2) relates to a previous example (e.g., example 1). In this example, for determining occurrence of the micro motion in the scene, the processing circuitry is further configured to: apply adaptive thresholding to the third values to discern whether the third values derive from the micro motion.

Another example (e.g., example 3) relates to a previous example (e.g., one of the examples 1 and 2). In this example, the adaptive thresholding includes subjecting the third values to constant false alarm rate detection.

Another example (e.g., example 4) relates to a previous example (e.g., one of examples 1 to 3). In this example, for determining occurrence of the micro motion in the scene, the processing circuitry is further configured to filter the third values for one or more predetermined range bins to remove the predetermined range bins from subsequent processing.

Another example (e.g., example 5) relates to a previous example (e.g., one of examples 2 or 3, or 4 in the case of relating to 2 or 3. In this example, for determining occurrence of the micro motion in the scene, the processing circuitry is further configured to increment a respective counter for the different range bins, in response to determining that the third value derives from the micro motion.

Another example, (e.g., example 6) relates to a previous example (e.g., one of examples 1 to 5). In this example, for determining occurrence of the micro motion in the scene, the processing circuitry is further configured to decrement a respective counter for the different range bins, in response to determining that the third value is not derived from the micro motion.

Another example (e.g., example 7) relates to a previous example (e.g., one of examples 5 or 6). In this example, for determining occurrence of the micro motion in the scene, the processing circuitry is further configured to determine occurrence of the micro motion in a respective range bin in response to a value of the counter for the range bin satisfying a predefined criterion.

Another example (e.g., example 8) relates to a previous example (e.g., one of examples 1 to 7). In this example, for determining the second values, the processing circuitry is further configured to perform a moving target indicator algorithm.

Another example (e.g., example 9) relates to a previous example (e.g., one of examples 1 to 8). In this example, the third values are determined using absolute values of the second values.

Another example (e.g., example 10) relates to a radar sensor comprising an apparatus for detecting micro motion according to a previous example (e.g., one of examples 1 to 9). The radar sensor further comprises one or more transmit channel configured to transmit one or more transmit signal into a field of view of the radar sensor. The radar sensor further comprises one or more receive channel configured to generate the radar data based on received reflections of the one or more transmit signal.

Another example (e.g., example 11) relates to a previous example (e.g., example 10). In this example the radar sensor includes a radio frequency integrated circuit, RFIC, and the apparatus for detecting micro motion is included in the RFIC.

Another example (e.g., example 12) relates to a previous example (e.g., example 11). In this example, the apparatus for micro motion detection is implemented as register transfer level circuitry.

Another example (e.g., example 13) relates to an electronic device comprising a radar sensor according to a previous example (e.g., one of examples 10 to 12). The electronic device further comprises processing circuitry coupled to the radar sensor and configured to perform a predefined action if occurrence of micro motion in the scene is determined by the radar sensor.

Another example (e.g., example 14) relates to a method for detecting micro motion in a scene sensed by a radar sensor having one or more receive channel. The method comprises receiving radar data outputted by the radar sensor for each receive channel, the radar data being arranged as frames for each receive channel. The method further comprises, for each receive channel, for each frame and for each range bin of a plurality of range bins of the radar data, each range bin corresponding to a distance window relative to the radar sensor, extracting micro motion information from the radar data of the considered range bin and generating a first value from said micro motion information. The method further comprises, for each receive channel, for each frame, for each range bin, determining a second value based on the first value determined for the considered range bin at the considered frame and a prior first value determined for the considered range bin at a prior frame. The method further comprises, for each range bin, determine a third value for the considered range bin based on the respective second values. The method further comprises determining occurrence of the micro motion in the scene based on the third values.

Another example (e.g., example 15) relates to a non-transitory machine-readable medium having stored thereon a program having a program code for performing the method according to a previous example (e.g., example 14), when the program is executed on a processor or a programmable hardware.

Another example (e.g., example 16) relates to a program having a program code for performing the method according to a previous example (e.g., example 14), when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (1) for detecting micro motion in a scene sensed by a radar sensor (10) having one or more receive channel, the apparatus comprising processing circuitry (2) configured to:
receive radar data outputted by the radar sensor (10) for each receive channel, the radar data being arranged as frames for each receive channel;
for each receive channel, for each frame and for each range bin of a plurality of range bins of the radar data, each range bin corresponding to a distance window relative to the radar sensor (10), extract micro motion information from the radar data of the considered range bin and generate a first value from said micro motion information;
for each receive channel, for each frame, for each range bin, determine a second value based on the first value determined for the considered range bin at the considered frame and a prior first value determined for the considered range bin at a prior frame;
for each range bin, determine a third value for the considered range bin based on the respective second values; and
determine occurrence of the micro motion in the scene based on the third values.

2. The apparatus (1) of claim 1, wherein, for determining occurrence of the micro motion in the scene, the processing circuitry (2) is further configured to:
apply adaptive thresholding to the third values to discern whether the third values derive from the micro motion.

3. The apparatus (1) of claim 2, wherein the adaptive thresholding includes subjecting the third values to constant false alarm rate detection.

4. The apparatus (1) of any one of claims 1 to 3, wherein, for determining occurrence of the micro motion in the scene, the processing circuitry (2) is further configured to:
filter the third values for one or more predetermined range bins to remove the predetermined range bins from subsequent processing.

5. The apparatus (1) of any one of claims 2 to 4 when dependent on 2 or 3, wherein, for determining occurrence of the micro motion in the scene, the processing circuitry (2) is further configured to:
increment a respective counter for the different range bins, in response to determining that the third value derives from the micro motion.

6. The apparatus (1) of any one of claims 1 to 5, wherein, for determining occurrence of the micro motion in the scene, the processing circuitry (2) is further configured to:
decrement a respective counter for the different range bins, in response to determining that the third value is not derived from the micro motion.

7. The apparatus (1) of claim 5 or 6, wherein, for determining occurrence of the micro motion in the scene, the processing circuitry (2) is further configured to:
determine occurrence of the micro motion in a respective range bin in response to a value of the counter for the range bin satisfying a predefined criterion.

8. The apparatus (1) of any one of claims 1 to 7, wherein for determining the second values, the processing circuitry (2) is configured to perform a moving target indicator algorithm.

9. The apparatus (1) of any one of claims 1 to 8, wherein the third values are determined using absolute values of the second values.

10. A radar sensor (10) comprising:
an apparatus (1) for detecting micro motion according to any one of claims 1 to 9;
one or more transmit channel configured to transmit one or more transmit signal into a field of view of the radar sensor (10); and
one or more receive channel configured to generate the radar data based on received reflections of the one or more transmit signal.

11. The radar sensor (10) of claim 10, wherein the radar sensor includes a radio frequency integrated circuit, RFIC, and wherein the apparatus (1) for detecting micro motion is included in the RFIC.

12. The radar sensor (10) of claim 11, wherein the apparatus (1) for micro motion detection is implemented as register transfer level circuitry.

13. An electronic device (20), comprising:
a radar sensor (10) according to any one of claims 10 to 12; and
processing circuitry (21) coupled to the radar sensor (10) and configured to perform a predefined action if occurrence of micro motion in the scene is determined by the radar sensor (10).

14. A method (30) for detecting micro motion in a scene sensed by a radar sensor (10) having one or more receive channel, the method comprising:
receiving (31) radar data outputted by the radar sensor (10) for each receive channel, the radar data being arranged as frames for each receive channel;
for each receive channel, for each frame and for each range bin of a plurality of range bins of the radar data, each range bin corresponding to a distance window relative to the radar sensor (10), extracting (32) micro motion information from the radar data of the considered range bin and generating (33) a first value from said micro motion information;
for each receive channel, for each frame, for each range bin, determining (34) a second value based on the first value determined for the considered range bin at the considered frame and a prior first value determined for the considered range bin at a prior frame;
for each range bin, determining (35) a third value for the considered range bin based on the respective second values; and
determining (36) occurrence of the micro motion in the scene based on the third values.

15. A non-transitory machine-readable medium having stored thereon a program having a program code for performing the method according to claim 14, when the program is executed on a processor or a programmable hardware.

## Amended claims

### Amended claims in accordance with Rule 137(2) EPC.

1. An apparatus (1) for detecting micro motion in a scene sensed by a radar sensor (10) having one or more receive channel, the apparatus comprising processing circuitry (2) configured to:
receive radar data outputted by the radar sensor (10) for each receive channel, the radar data being arranged as frames for each receive channel;
for each receive channel, for each frame and for each range bin of a plurality of range bins of the radar data, each range bin corresponding to a distance window relative to the radar sensor (10), extract micro motion information from the radar data of the considered range bin and generate a first value from said micro motion information, wherein the first value corresponds to a range bin that is associated with a zero-doppler value;
for each receive channel, for each frame, for each range bin, determine a second value based on the first value determined for the considered range bin at the considered frame and a prior first value determined for the considered range bin at a prior frame, wherein the second value corresponds to a change of the first value with respect to the prior first value;
for each range bin, determine a third value for the considered range bin based on the respective second values by accumulating the second values across the receive channels over a predetermined number of consecutive frames; and
determine occurrence of the micro motion in the scene based on the third values.

2. The apparatus (1) of claim 1, wherein, for determining occurrence of the micro motion in the scene, the processing circuitry (2) is further configured to:
apply adaptive thresholding to the third values to discern whether the third values derive from the micro motion.

3. The apparatus (1) of claim 2, wherein the adaptive thresholding includes subjecting the third values to constant false alarm rate detection.

4. The apparatus (1) of any one of claims 1 to 3, wherein, for determining occurrence of the micro motion in the scene, the processing circuitry (2) is further configured to:
filter the third values for one or more predetermined range bins to remove the predetermined range bins from subsequent processing.

5. The apparatus (1) of any one of claims 2 to 4 when dependent on 2 or 3, wherein, for determining occurrence of the micro motion in the scene, the processing circuitry (2) is further configured to:
increment a respective counter for the different range bins, in response to determining that the third value derives from the micro motion.

6. The apparatus (1) of any one of claims 1 to 5, wherein, for determining occurrence of the micro motion in the scene, the processing circuitry (2) is further configured to:
decrement a respective counter for the different range bins, in response to determining that the third value is not derived from the micro motion.

7. The apparatus (1) of claim 5 or 6, wherein, for determining occurrence of the micro motion in the scene, the processing circuitry (2) is further configured to:
determine occurrence of the micro motion in a respective range bin in response to a value of the counter for the range bin satisfying a predefined criterion.

8. The apparatus (1) of any one of claims 1 to 7, wherein for determining the second values, the processing circuitry (2) is configured to perform a moving target indicator algorithm.

9. The apparatus (1) of any one of claims 1 to 8, wherein the third values are determined using absolute values of the second values.

10. A radar sensor (10) comprising:
an apparatus (1) for detecting micro motion according to any one of claims 1 to 9;
one or more transmit channel configured to transmit one or more transmit signal into a field of view of the radar sensor (10); and
one or more receive channel configured to generate the radar data based on received reflections of the one or more transmit signal.

11. The radar sensor (10) of claim 10, wherein the radar sensor includes a radio frequency integrated circuit, RFIC, and wherein the apparatus (1) for detecting micro motion is included in the RFIC.

12. The radar sensor (10) of claim 11, wherein the apparatus (1) for micro motion detection is implemented as register transfer level circuitry.

13. An electronic device (20), comprising:
a radar sensor (10) according to any one of claims 10 to 12; and
processing circuitry (21) coupled to the radar sensor (10) and configured to perform a predefined action if occurrence of micro motion in the scene is determined by the radar sensor (10).

14. A method (30) for detecting micro motion in a scene sensed by a radar sensor (10) having one or more receive channel, the method comprising:
receiving (31) radar data outputted by the radar sensor (10) for each receive channel, the radar data being arranged as frames for each receive channel;
for each receive channel, for each frame and for each range bin of a plurality of range bins of the radar data, each range bin corresponding to a distance window relative to the radar sensor (10), extracting (32) micro motion information from the radar data of the considered range bin and generating (33) a first value from said micro motion information, wherein the first value corresponds to a range bin that is associated with a zero-doppler value;
for each receive channel, for each frame, for each range bin, determining (34) a second value based on the first value determined for the considered range bin at the considered frame and a prior first value determined for the considered range bin at a prior frame wherein the second value corresponds to a change of the first value with respect to the prior first value;
for each range bin, determining (35) a third value for the considered range bin based on the respective second values by accumulating the second value across the receive channels over a predetermined number of consecutive frames; and
determining (36) occurrence of the micro motion in the scene based on the third values.

15. A non-transitory machine-readable medium having stored thereon a program having a program code for performing the method according to claim 14, when the program is executed on a processor or a programmable hardware.
